# EUROPEAN PATENT SPECIFICATION

(11) **EP 1 630 889 B1**
(45) Date of publication and mention of the grant of the patent: **25.09.2013**
(21) Application number: 05105670.3
(22) Date of filing: 24.06.2005
(51) Int. Cl.: H01M 2/10, H01M 10/48

(54) **Battery cap for a battery cell of a mobile electronic device**
Batteriekappe für eine Batterie in einem tragbaren elektronischen Gerät
Bouchon pour une batterie d'un appareil électronique mobile

(30) Priority: 30.06.2004 EP 04103095
(43) Date of publication of application: 01.03.2006
(73) Proprietor: Tyco Electronics Nederland B.V., 5201 AG's-Hertogenbosch (NL)
(72) Inventor: Tuin, Jacobus Nicolaas, 5684 HC, Best (NL)
(74) Representative: Johnstone, Douglas Ian

(56) References cited:
- EP-A- 0 643 429
- EP-A- 1 032 108
- EP-A- 1 309 020
- US-B1- 6 218 041
- US-B1- 6 377 025
- PATENT ABSTRACTS OF JAPAN vol. 1997, no. 04, 30 April 1997 (1997-04-30) & JP 08 329913 A (SANYO ELECTRIC CO LTD), 13 December 1996 (1996-12-13)

## Description

The present invention relates to battery cells and battery packs for mobile electronic devices and in particular to a cap for a battery cell of a mobile electronic device.

Mobile electronic devices such as mobile phones or personal digital assistants (PDA) comprise power supplies which are typically placed in a cavity of the mobile electronic device. Over the last few years, the size of the mobile electronic devices has been remarkably decreased while their functionality and the range of applications offered have been increased. Considerable efforts have been taken to reduce the power consumption of electronic components used in the mobile electronic devices. On the other hand, further electronic components have been added to improve the versatility of mobile electronic devices. In particular the desire for enlarged displays have led to an increased power supply demand. Although the efficiency of the power supplies has also been improved, the storage capacity desired requires that the power supply has a relative big size and therefore, a considerable portion of the overall volume of the mobile electronic devices is consumed by the power supply.

Typically, a battery pack comprising a rechargeable battery cell is used as a power supply. Since the storage capacity of a rechargeable battery cell typically decreases over prolonged periods of use, the life-span of the battery cell is limited. The battery cell can also fail for other reasons and therefore, an option to replace the battery cell is highly desired. To meet this desire, a battery pack is typically detachably connected with the mobile electronic device to allow its replacement. An example of such a conventional battery pack is described in EP-A-1,309,020.

The electrical connection between the battery cell and the mobile electronic device is provided by a specially designed connector assembly. One part of the assembly is attached to the battery cell while the other one is attached to the mobile electronic device. Since mobile electronic devices may experience mechanical strain, the battery cell, which is a compact component having a considerable weight, must be securely fixed within the mobile electronic device. In particular the connector assembly provides an electrical connection between the battery cell and the mobile electronic device and could be damaged if the battery cell is not adequately fixed. In addition to that, an alignment of the battery cell is required upon insertion of the battery cell to further reduce the risk of accidental damage of the connector assembly. Alignment means moulded onto the battery cell exhibits certain tolerances so that a proper alignment is not ensured.

It is therefore an object of the invention to take suitable measures to reduce the risk of damage of the connector assembly and to improve the reliability of the electrical connection. It is a further object of the invention to reduce unwanted tolerances and to simplify the manufacturing process of a battery pack.

According to an aspect of the invention there is provided a cap for a mobile electronic device battery cell according to the appended claim 1.

The cap provides for an alignment of the contact and for an electrical connection of the battery cell. In the following description, the term "contact" refers both to one and more contacts unless otherwise stated. The first alignment means are aligned with respect to the contact such that upon engaging with corresponding alignment means of the mobile electronic device the contact of the cap is aligned with respect to the corresponding contact of the mobile electronic device. The risk of accidental damage of either of the contacts is therefore significantly reduced. Preferably, the contact allows a detachable connection with the mobile electronic device.

The first alignment means can be of various different sizes and shapes and comprise for instance faces, pins, recesses, indentations or depressions. Moreover, the first alignment means can be formed by only one or two separate alignment structures.

By integrating the first alignment means and the contact into a cap, a modular arrangement of a battery pack is provided. The main components of this modular arrangement are the battery cell and the cap. The cap is separately manufactured and subsequently attached to the battery cell. The modular arrangement offers many advantages over a direct attachment of alignment means and the connector to the battery cell. For instance, alignment means have often been formed directly on the battery cell by hot-melt moulding which involves the risk that hot-melt material gets into a connector already attached to the battery cell. Further, structures formed by hot-melt moulding exhibit certain tolerances and are therefore only partially suitable as alignment means. A direct forming of alignment means on the battery cell further requires that the battery cell must be pre-aligned prior to the moulding which further adds some unwanted tolerances. In addition to that, a direct forming of alignment means on the battery cell limits the number of suitable manufacturing process to those which are compatible with the battery cell to avoid damaging of the battery cell.

The invention reduces or even eliminates these drawbacks by integrating the alignment means and the contact into a separate cap. The separately manufactured cap can be formed with a much higher precision than alignment means directly moulded onto the battery cell.

Preferably, the cap comprises a housing. The housing preferably comprises openings to provide access to the contact for the mating contact of the mobile electronic device. Further, the first alignment means are preferably formed by at least one portion of the housing, in particular as integrally formed structures, such as for instance indentations or recesses. Since the housing with its first alignment means is separately formed, any suitable manufacturing process can be used to make the housing regardless of the compatibility of the battery cell with the manufacturing processes. Once the housing has been formed, the contact and the housing are assembled and aligned with each other. This alignment ensures that the contact of the cap will be properly aligned with the mating contact of the mobile electronic device upon insertion.

To ensure proper alignment of the contact with respect to the housing, the contact comprises alignment means such as an alignment pin. The alignment means of the contact engage with corresponding alignment means of the housing, which is referred to as third alignment means of the housing. Preferably, the third alignment means are integrally formed with the housing. The assembly of housing and contact thus forms a connector for connecting the battery cell with the mobile device. The connector is therefore an integral part of the battery cap.

Since all critical alignment means are integrated into the housing, all components are aligned with respect to the housing and therefore with respect to each other.

After assembly of the contact and housing, the cap is attached to the battery. Preferably, the cap is permanently attached to the battery cell. An option to provide a permanent attachment is for instance a resistance welding of the connection means to respective connection means of the battery cell. Resistance welding provides a durable mechanical and electrical connection.

Although an alignment of the battery cell with respect to the cap is not as critical as the alignment of the contact, an alignment of cap and battery cell is also desired. Preferably, the second alignment means are formed to allow an engagement with the connection means of the battery cell. The second alignment means are preferably also integrated into and integrally formed with the housing so that the housing comprises all alignment means and aligns the respective components with respect to each other to reduce unwanted tolerances.

The cap further allows an easy integration of additional components, which are required in connection with the utilization of the battery cell as a power supply. For instance, the battery cell must be protected against overheating and overcharging. The respective electronic circuits providing safety and charging functions are preferably integrated into the cap. To facilitate the integration, the cap further comprises a printed circuit board. Preferably, the contact and the respective electronic circuits are attached to the printed circuit board. In addition to that, the connection means are also attached to the printed circuit board, in particular, when they also provide an electrical connection between battery cell and cap. Preferably, the connection means fixes the printed circuit board within the housing.

A further advantage of the invention is that the cap provides a specific interface between a battery cell and different mobile electronic devices. The caps can be tailored to meet specific needs of different mobile electronic devices such that the same type of battery cell can be used for different mobile electronic devices.

According to another aspect of the present invention, there is provided a battery pack comprising a battery cell and a cap attached to the battery cell.

All aspects and advantages outlined above with respect to the cap apply mutatis mutandis to the battery pack and are therefore not reiterated here to avoid superfluous repetitions.

Having described some of the main features of the invention, a more detailed description of the invention, from which further features will be apparent, is set forth in the remainder of the specification in conjunction with the accompanying drawings which show in:
Figure 1 a cap without a housing attached to a battery cell;
Figure 2 a printed circuit board of a cap;
Figures 3 and 4 front faces of a battery cell with connection means;
Figure 5 a battery pack comprising a battery cell and a cap in an exploded view;
Figure 6 and 7 a view from the rear of a cap;
Figure 8 a front view of a housing;
Figure 9 a cap with assembled contacts and connection means for connecting the battery cell;
Figure 10 three single contacts of a different embodiment;
Figure 11 the contacts of Figure 10 assembled into a housing; and
Figure 12 a battery back.

Reference will now be made in detail to the presently preferred embodiments of the invention, examples of which are illustrated in the drawings. Each example is provided by way of explanation of the invention, and is not meant as a limitation of the invention. For example, features illustrated or described as part of one embodiment can be used on or in conjunction with other embodiments to yield yet a further embodiment. It is intended that the present invention includes such modifications and variations.

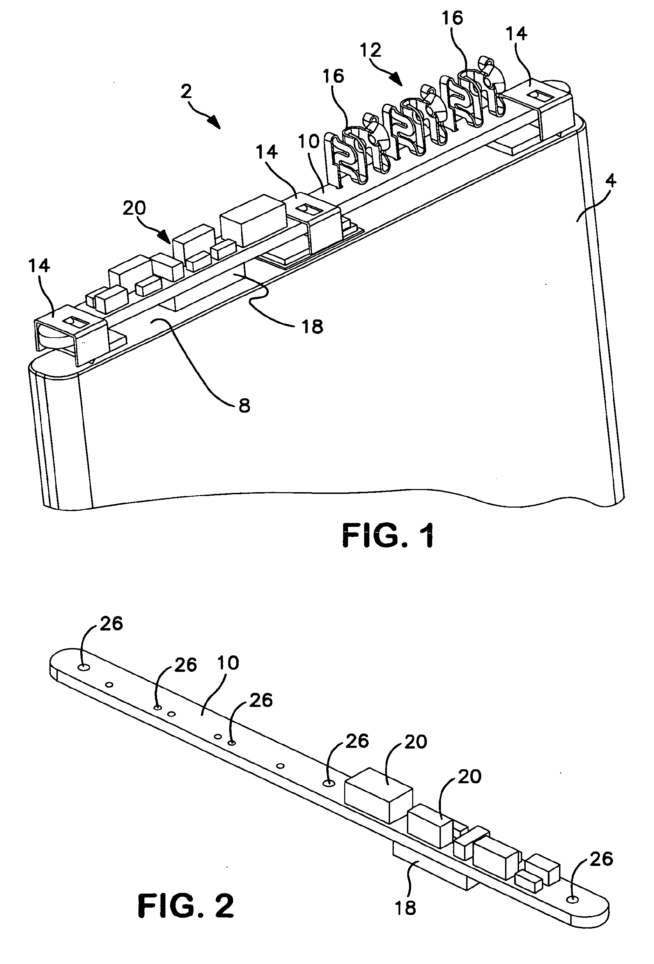

Figure 1 shows a cap 2 without a housing attached to a battery cell 4. In this particular embodiment, the battery cell 4 is for a mobile phone and has a plate-like body with a thickness of for instance 3 mm. Connection means 6 are formed on a front face 8 of the battery cell 4, to which the cap 2 is attached. The connection means 6 of the battery cell 4 also provide for an electrical connection with the cap 2.

The cap 2 comprises a printed circuit board 10, a connector 12 and connection means 14. The connector 12 comprises in this particular embodiment separate single contacts 16, each of which is for engaging with a respective contact of a connector attached to the mobile phone. The contacts 16 are soldered to the printed circuit board 10 by manual or automated soldering. In comparison to reflow soldering, the thermal strain occurring during manual and automated soldering is lower. Therefore, cheaper plastic material can be used.

A plurality of electronic components are further soldered to the printed circuit board 10 such as a circuit breaker 18 and a controller 20 for controlling the recharging of the battery cell 4.

Typically, the voltage applied to charge the battery cell 4 is controlled by the controller 20. The charging controller 20 terminates the charging when the battery cell is fully charged or disconnects the battery cell 4 when the voltage applied exceeds a given limit. The circuit breaker 18 disconnects the battery cell from the mobile phone if certain critical parameters are exceeded such as the temperature of the battery cell.

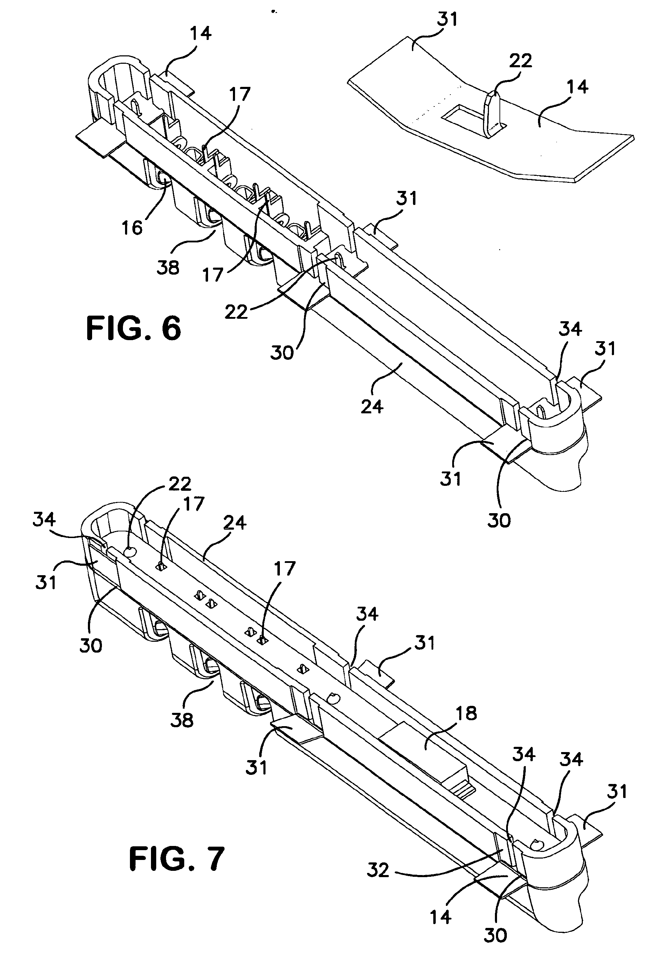

The connection means are formed in this particular embodiment by U-shaped welding brackets 14, each of which comprises a solder leg 22 shown in Figure 6 for soldering the brackets 14 to the printed circuit board 10. The legs of the welding brackets 14 are resistance welded to mounting brackets 6 forming the connection means of the battery cell 4. Besides attaching the cap 2 to the battery cell 4, the welding brackets 14 also fix the printed circuit board 10 to a housing 24 shown for instance in Figure 7.

Figure 2 gives a more detailed view of the printed circuit board 10 with soldered controller 20 and circuit breaker 18. Openings 26 are provided for soldering the contacts 16 and the welding brackets 14.

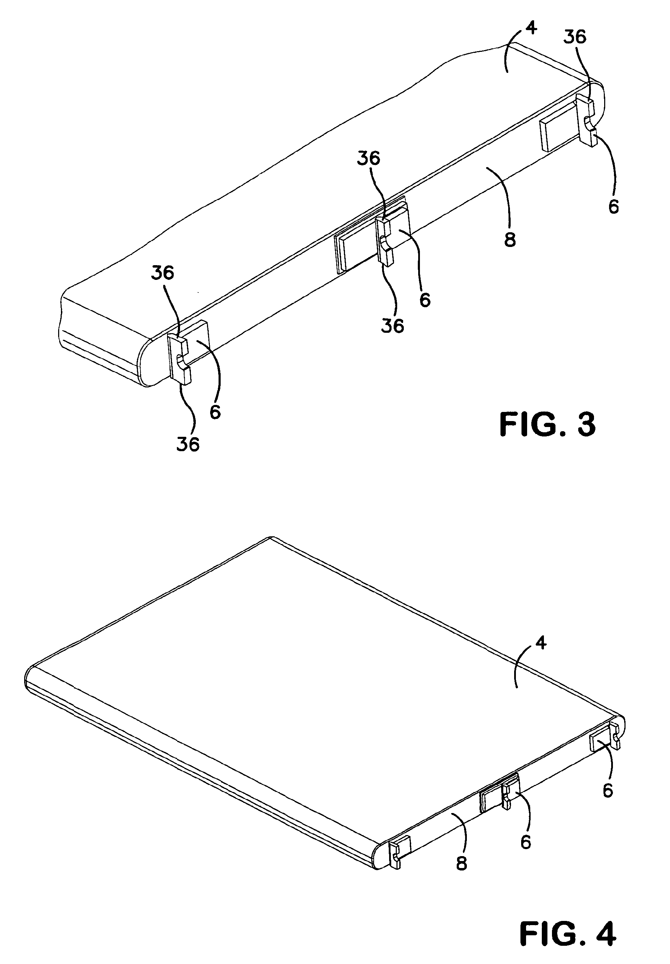

With reference to Figures 3 and 4, the battery cell 4 is described in more detail. On front face 8, three mounting brackets 6 are arranged to provide connection means for a mechanical and electrical connection between the battery cell 4 and the cap 2. The outer mounting brackets 6 are directly attached to the housing of the battery cell 4 while the middle bracket 6 is electrically insulated with respect to the housing. In this particular embodiment, each L-shaped mounting bracket 6 is resistance welded to the battery cell 4 on one of its two legs. The other legs project from the front face 8. The size and shape of the mounting brackets are not restricted to the particular embodiment shown here.

The battery cell 4 is typically very thin so as to be insertable into a mobile phone. Typical values for the thickness of the battery cell 4 are 3 mm, 4.7 mm and 5.7 mm. The length of the battery cell 4 with the cap attached can be for instance 54 mm.

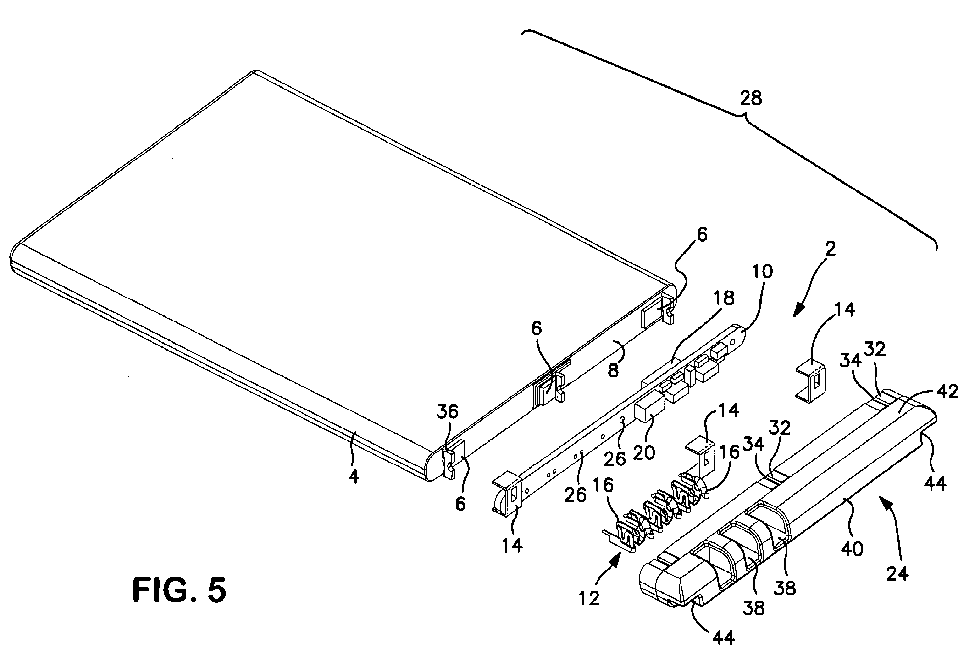

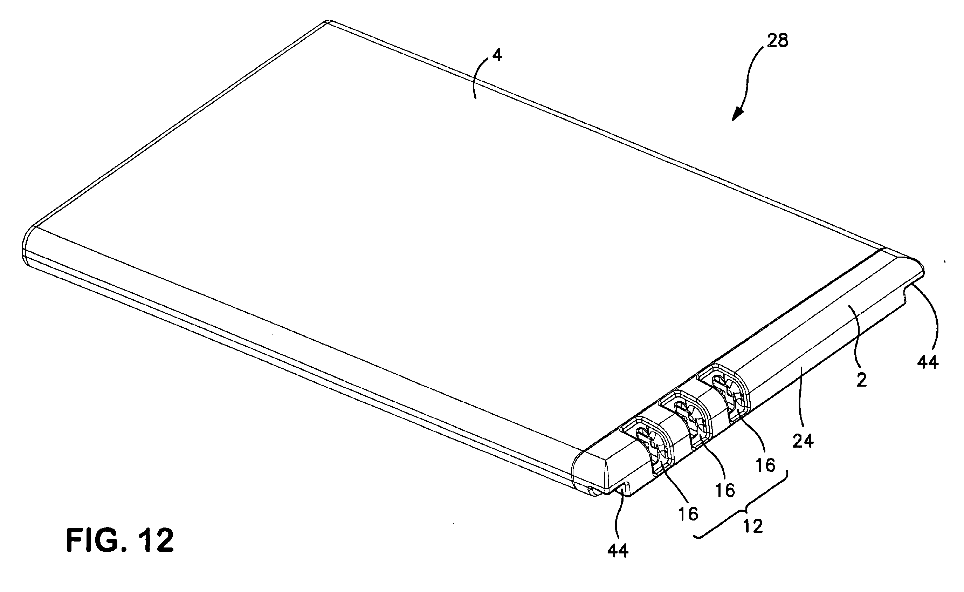

Turning now to Figure 5, an exploded view of a battery pack 28 as illustrated in Figure 12 comprising a cap 2 and a battery cell 4 is shown. A more detailed illustration of the arrangement of the welding brackets is apparent from Figure 6 and 7. The welding brackets 14 extend through slots 30 running parallel to the longitudinal extension of the housing 24. The portions 31 of the welding brackets 14 projecting from the outer lateral surface of the housing 24 are rearwardly bent and are accommodated in recesses 32 arranged on outer lateral surfaces of the housing 24. The thickness of the welding brackets, which are preferably metal brackets suitable to be resistance welded, and the depth of the recesses 32 are adjusted such that the outer surfaces of the welding brackets 14 are substantially coplanar with surrounding portions of the outer lateral surface of the housing 24.

In order to assemble the cap, the welding brackets 14 are inserted into the housing 24 by pushing them through the respective slots 30 of the housing with their solder legs 22 projecting in a backward direction. The slots 30 provide a tight fit of the welding brackets 14. The contacts 16 are inserted into the housing 24 and aligned by third alignment means (not shown). In this embodiment, the contacts 16 are clamped between vertically extending internal walls (not shown) of the housing, which form here the third alignment means. In a next step, the printed circuit board 10 is placed into the housing 24 from its rear open end such that the solder legs 22 of the welding brackets 14 and the solder legs 17 of the contacts 16 pass through the openings 26. Preferably, circuit breaker 18 and controller 20 are soldered to the printed circuit board 10 prior of its insertion into the housing 24. The printed circuit board is aligned with respect to the housing by the welding brackets 14 fitted in the slots 30.

After insertion of the printed circuit board 10, the welding brackets 14 and the contacts 16 are soldered to fix the printed circuit board 10 within the housing 24.

To align the housing 24 with the battery cell 4, alignment slots 34, which form here the second alignment means and which run perpendicular to the longitudinal extension of the housing 24, are formed on the rear portion of housing 24. Three pairs of slots 34 are arranged in correspondence to the positions of the mounting brackets 6 of the battery cell 4 such that each mounting bracket can simultaneously rest in both slots of a pair. In each recess 32 a slots 34 is arranged so that opposite abutting faces 36 of each mounting bracket 6 are in contact or close to an inner surface of a leg of the welding brackets 14. The connection between the welding and the mounting brackets is formed along these abutting faces by resistance welding. To this end, the preassembled cap 2 is put on the front face 8 of the battery cell 4 such that the mounting brackets 6 are inserted into the alignment slots 34, and such that the rearwardly bent legs of the welding brackets can subsequently be welded to the mounting brackets 6 along their abutting faces 36 to provide a permanent and stable mechanical and electrical connection. Upon insertion, the cap is aligned with respect to the battery cell 4 due to the engagement of the mounting brackets 6 and the alignment slots 34.

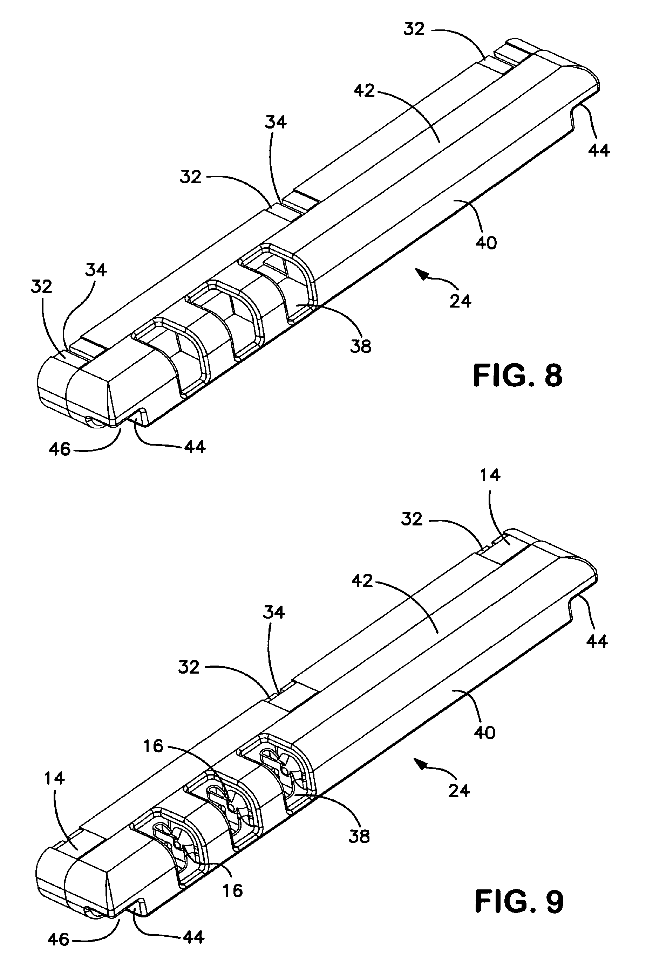

Figures 8 and 9 give a front view of the housing 24. Three openings 38 asymmetrically arranged with respect to the longitudinal extension of the housing 24 are formed on the front side of the housing 24 to provide access to each of the contacts 16 of connector 12. Each of the slit-like openings 38 runs from the front surface 40 to a lateral surface 42 of the housing 24 to facilitate the insertion of a contact of a mating connector. Since the battery pack 28 is placed into a cavity of the mobile phone, the slit-like openings and the contacts 16 allow the battery pack 28 to be easily inserted into the mobile phone without damaging the contacts of each connector.

For aligning the battery pack 28 within the mobile phone, alignment faces 44 are provided on outer edges of the housing 24. The alignment faces 44 are formed by the side surfaces of indentations or depressions 46 provided on corners of the housing 24. The alignment faces 44 run parallel to the lateral extension of the battery cell 4. Other side surfaces of the indentation 46 run perpendicular to the lateral extension of the battery cell and serve as stop surfaces to restrict a lateral movement of the battery pack when placed into the mobile phone.

Due to the engagement of the alignment faces 44 with corresponding alignment means of the mobile phone and the alignment of the connector 12 with respect to the alignment faces 44, the connector 12 is aligned with respect to the connector of the mobile phone.

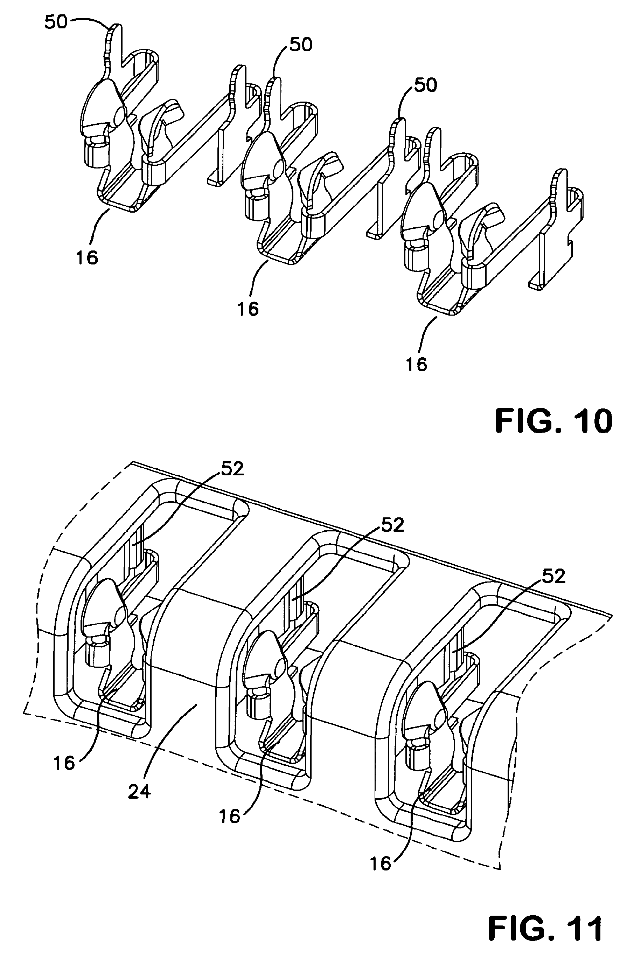

The alignment of the contacts 16 with respect to the housing 24 is described in more detail in conjunction with Figures 10 and 11. Figure 11 shows three contacts 16 of a different embodiment of the invention comprising a different type of contacts. Each contact 16 has two alignment pins 50 that engage corresponding alignment slots 52 of the housing 24. Upon assembly, the alignment pins 50 are inserted into the alignment slots 52 and thereby align the contacts 16 with respect to the housing 24.

The present invention described by way of example in connection with the above embodiments allows an reduction of tolerances involved with the manufacturing of known battery packs and simplifies the manufacturing process. This improvement is achieved by integrating alignment means (positioning or guiding means) and the battery connector into a cap and, preferably, into a housing of the cap, which is separately manufactured. Since the alignment means and the battery connector are in the same part, unwanted tolerances, which are connected with the conventional moulding processes for forming alignment means directly on the battery cell, are reduced. The cap further allows the integration of further components required for the utilisation of the battery cell such as a circuit breaker and a charging controller. The cap is attached to the battery cell by connection means such as welding brackets, which are resistance welded to the battery cell to provide a strong and durable connection. The separate cap does not significantly add to the overall size of a battery pack.

In addition to the inventive cap described so far a further cap can be attached to a rear face of the battery cell to adjust the overall length of the battery pack for specific needs of different mobile electronic devices. This further or end cap reduces clearances or tolerances between the battery pack and the interior of the respective mobile electronic device such that the inserted battery pack has a good fit in the respective mobile electronic device.

### Parts List

- 2: cap
- 4: battery cell
- 6: connection mean of battery cell 4 / mounting brackets
- 8: front face
- 10: printed circuit board
- 12: connector
- 14: connection means / welding bracket
- 16: contact
- 17: solder legs of contact 16
- 18: circuit breaker
- 20: controller
- 22: solder legs of connection means 14
- 24: housing
- 26: openings in printed circuit board for welding brackets 14
- 28: battery pack
- 30: slots of housing 24
- 31: bent portions of welding brackets 14
- 32: recess
- 34: second alignment means / alignment slots
- 36: abutting face
- 38: opening
- 40: front surface
- 42: lateral surface
- 44: first alignment means / alignment faces
- 46: indentation / depression
- 50: alignment pin
- 52: third alignment means / alignment slot

## Claims

1. A cap (2) for a mobile electronic device battery cell (4) that includes connection means (6) for electrical connection with the cap, the cap comprises:
at least one contact (12, 16) for a detachable electronic connection between the battery cell (4) and the mobile electronic device; and
first alignment means (44) for engaging with respective alignment means of the mobile electronic device to align the contact (12, 16) with respect to a corresponding contact of the mobile electronic device;
slots (30) and alignment slots (34) arranged in pairs in correspondence with the connection means (6) and configured for insertion of said connection means (6);
**characterised in that** the cap (2) further includes welding brackets (14) for attaching the cap to the connection means (6) once the connection means are inserted into the alignment slots (34), the welding brackets for providing both mechanical and electrical connection between said battery cell (4) and said cap (2).

2. A cap according to claim 1, **characterised in that** the cap (2) further comprises a housing (24), and that the first alignment means (44) are formed by at least one portion of the housing (24).

3. A cap according to claim 2, **characterised in that** the housing (24) comprises at least one indentation (46) which forms the first alignment means (44).

4. A cap according to any of the preceding claims, **characterised in that** the cap (2) further comprises a printed circuit board (10), to which the contact (12, 16) is connected.

5. A cap according to claim 4, **characterised in that** the welding brackets (14) are attached to the printed circuit board (10).

6. A cap according to any of the preceding claims, **characterised in that** the housing (24) comprises third alignment means (52) for engaging with respective alignment means (50) of the contact (12, 16).

7. A battery pack (28) for a mobile electronic device comprising a battery cell (4) and a cap (2) according to any of the preceding claims, the cap (2) being attached to the battery cell (4).

## Patentansprüche

1. Kappe (2) für eine Batteriezelle (4) eines mobilen elektronischen Geräts, die Verbindungsmittel (6) für eine elektrische Verbindung mit der Kappe einschließt, wobei die Kappe Folgendes umfasst:
wenigstens einen Kontakt (12, 16) für eine lösbare elektronische Verbindung zwischen der Batteriezelle (4) und dem mobilen elektronischen Gerät und
erste Ausrichtungsmittel (44) zum Eingriff mit jeweiligen Ausrichtungsmitteln des mobilen elektronischen Geräts, um den Kontakt (12, 16) mit einem entsprechenden Kontakt des mobilen elektronischen Geräts auszurichten,
Schlitze (30) und Ausrichtungsschlitze (34), die in Paaren in Übereinstimmung mit den Verbindungsmitteln (6) angeordnet und für ein Einsetzen der Verbindungsmittel (6) konfiguriert sind,
**dadurch gekennzeichnet, dass** die Kappe (2) ferner Schweißhalterungen (14) zum Befestigen der Kappe an den Verbindungsmitteln (6), sobald die Verbindungsmittel in die Ausrichtungsschlitze (34) eingesetzt werden, einschließt, wobei die Schweißhalterungen dazu dienen, sowohl eine mechanische als auch eine elektrische Verbindung zwischen der Batteriezelle (4) und der Kappe (2) zu gewährleisten.

2. Kappe nach Anspruch 1, **dadurch gekennzeichnet, dass** die Kappe (2) ferner ein Gehäuse (24) umfasst und dass die ersten Ausrichtungsmittel (44) durch wenigstens einen Abschnitt des Gehäuses (24) gebildet werden.

3. Kappe nach Anspruch 2, **dadurch gekennzeichnet, dass** das Gehäuse (24) wenigstens eine Vertiefung (46) umfasst, welche die ersten Ausrichtungsmittel (44) bildet.

4. Kappe nach einem der vorhergehenden Ansprüche, **dadurch gekennzeichnet, dass** die Kappe (2) ferner eine gedruckte Leiterplatte (10) umfasst, mit welcher der Kontakt (12, 16) verbunden ist.

5. Kappe nach Anspruch 4, **dadurch gekennzeichnet, dass** die Schweißhalterungen (14) an der gedruckten Leiterplatte (10) befestigt sind.

6. Kappe nach einem der vorhergehenden Ansprüche, **dadurch gekennzeichnet, dass** das Gehäuse (24) dritte Ausrichtungsmittel (52) zum Ineinandergreifen mit jeweiligen Ausrichtungsmitteln (50) des Kontaktes (12, 16) umfasst.

7. Batteriesatz (28) für ein mobiles elektronisches Gerät, der eine Batteriezelle (4) und eine Kappe (2) nach einem der vorhergehenden Ansprüche umfasst, wobei die Kappe (2) an der Batteriezelle (4) befestigt ist.

## Revendications

1. Capuchon (2) pour une cellule de batterie d'un dispositif électronique mobile (4), englobant des moyens de connexion (6) pour établir la connexion électrique avec le capuchon, le capuchon comprenant :
au moins un contact (12, 16) pour établir une connexion électronique détachable entre la cellule de batterie (4) et le dispositif électronique mobile ; et
des premiers moyens d'alignement (44), destinés à s'engager dans des moyens d'alignement respectifs du dispositif électronique mobile, pour aligner le contact (12, 16) par rapport à un contact correspondant du dispositif électronique mobile ;
des fentes (30) et des fentes d'alignement (34) agencées par paires, en correspondance avec les moyens de connexion (6), et destinées à l'insertion desdits moyens de connexion (6) ;
**caractérisé en ce que** le capuchon (2) englobe en outre des consoles de soudage (14) pour fixer le capuchon sur les moyens de connexion (6) après l'insertion des moyens de connexion dans les fentes d'alignement (34), les consoles de soudage servant à établir une connexion mécanique et électrique entre ladite cellule de batterie (4) et ledit capuchon (2).

2. Capuchon selon la revendication 1, **caractérisé en ce que** le capuchon (2) comprend en outre un boîtier (24), les premiers moyens d'alignement (44) étant formés par au moins une partie du boîtier (24).

3. Capuchon selon la revendication 2, **caractérisé en ce que** le boîtier (24) comprend au moins un renfoncement (46), formant les premiers moyens d'alignement (44).

4. Capuchon selon l'une quelconque des revendications précédentes, **caractérisé en ce que** le capuchon (2) comprend en outre une carte de circuit imprimé (10) à laquelle le contact (12, 16) est connecté.

5. Capuchon selon la revendication 4, **caractérisé en ce que** les consoles de soudage (14) sont fixées sur la carte de circuit imprimé (10).

6. Capuchon selon l'une quelconque des revendications précédentes, **caractérisé en ce que** le boîtier (24) comprend des troisièmes moyens d'alignement (52), destinés à s'engager dans des moyens d'alignement respectifs (50) du contact (12, 16).

7. Bloc-batterie (28) pour un dispositif électronique mobile, comprenant une cellule de batterie (4) et un capuchon (2) selon l'une quelconque des revendications précédentes, le capuchon (2) étant fixé sur la cellule de batterie (4).
